# EUROPEAN PATENT APPLICATION

(11) **EP 3 882 511 A1**
(43) Date of publication of application: **22.09.2021**
(21) Application number: 21163822.6
(22) Date of filing: 19.03.2021
(51) Int. Cl.: F21S 6/00, F16C 11/00, F21V 21/26, F21V 23/00, H01R 35/00

(54) **CYLINDRICAL JOINT FOR THE ORIENTATION OF AN ADJUSTABLE LIGHT SOURCE**

(30) Priority: 19.03.2020 IT 202000005926
(71) Applicant: Nemo S.r.l., 20149 Milano (IT)
(72) Inventor: LOSTAGLIO, Claudio, 20149 MILANO (IT); ERBA, Marco, 20149 MILANO (IT); PALAZZARI, Federico, 20121 MILANO (IT)
(74) Representative: Bergadano, Mirko

(57) **Abstract**

An adjustable light source (3) is supported by an articulated arm (4) comprising at least one cylindrical joint (6) having a first arm (9) and a second arm (10) hinged to one another to rotate one with respect to the other around a hinge axis (22); the cylindrical joint (6) housing a section (24B) of an electrical wiring (24) for powering the light source (3); the section (24B) comprising, for each arm (9) (10), two insulated conductor elements (27) (20) constituting part of the relative arm (9) (10) and a pair of sliding contacts (40) electrically connected to the conductor elements (27) (20) and at least partially surrounding the hinge axis (22).

## Description

### CROSS-REFERENCE TO RELATED APPLICATIONS

This patent application claims priority from Italian patent application no. 102020000005926 filed on 19/03/2020.

### TECHNICAL FIELD

The present invention relates to a cylindrical joint for the orientation of an adjustable light source.

In particular, the present invention relates to a cylindrical joint for the orientation of a table lamp, to which the following discussion will explicitly refer without thereby losing generality.

### BACKGROUND ART

As is known, in the field of illuminating devices, in general, and of table lamps, in particular, a light source is supported in an adjustable manner by an articulated arm which rises from a support or attachment base. The articulated arm comprises, generally, two or more rigid portions and a plurality of cylindrical joints depending on the provided freedom of movement.

The light source is connectable to an electric power supply network by means of an electrical wiring, which comprises sections that extend along or within the rigid portions of the arm and deformable sections that extend outside and over the provided cylindrical joints.

Each deformable section has a variable geometry according to the configuration of the arm and in any case has a length such to allow a free movement of the portions that converge in the relative joint.

Although employed, the known solutions of the type described above are poorly satisfying from an aesthetic point of view since a part of the electrical wiring always remains anyway visible and it changes its course according to the position of the light source and its aesthetic characteristics over time by effect to its exposure and its interactions with the outside environment.

In addition to this, the known solutions suffer from the drawback of not being sufficiently efficient and reliable, since the portion of the electrical wiring that extends over each joint, varies its tension and its curvature at each adjustment of the arm or of the light source and thus tends to wear out over time and break also after a relatively small number of adjustment cycles interrupting the power supply to the source which is restorable, when possible, with the complete replacement of the whole electrical wiring.

### DISCLOSURE OF INVENTION

The object of the present invention is to provide a cylindrical joint for the orientation of a light source, which allows solving in a simple and cost-effective manner the problems described above manner and, in particular, allows manufacturing illuminating assemblies having a high aesthetic value and, at the same time, a high and constant reliability and functional efficiency over time.

According to the present invention, a cylindrical joint for the orientation of a light source is provided, as claimed in claim 1.

### BRIEF DESCRIPTION OF THE DRAWINGS

The invention will now be described with reference to the accompanying figures, which illustrate a non-limiting embodiment example, wherein:
Figure 1 illustrates, in a perspective view, a table lamp provided with joints for the orientation of its light source, each manufactured according to the specifications of the present invention;
Figure 2 is a side view, on an enlarged scale, of a first preferred embodiment of one of the joints of Figure 1;
Figures 3A and 3B are sections, respectively, along the lines IIIA-IIIA and IIIB-IIIB of Figure 2;
Figure 4 is an exploded perspective view of the joint of Figures 2 and 3;
Figure 5 is a variant of a detail of Figure 4; and
Figure 6 is a perspective view, with parts removed for the sake of clarity, of a second preferred embodiment of one of the joints of Figure 1.

### BEST MODE FOR CARRYING OUT THE INVENTION

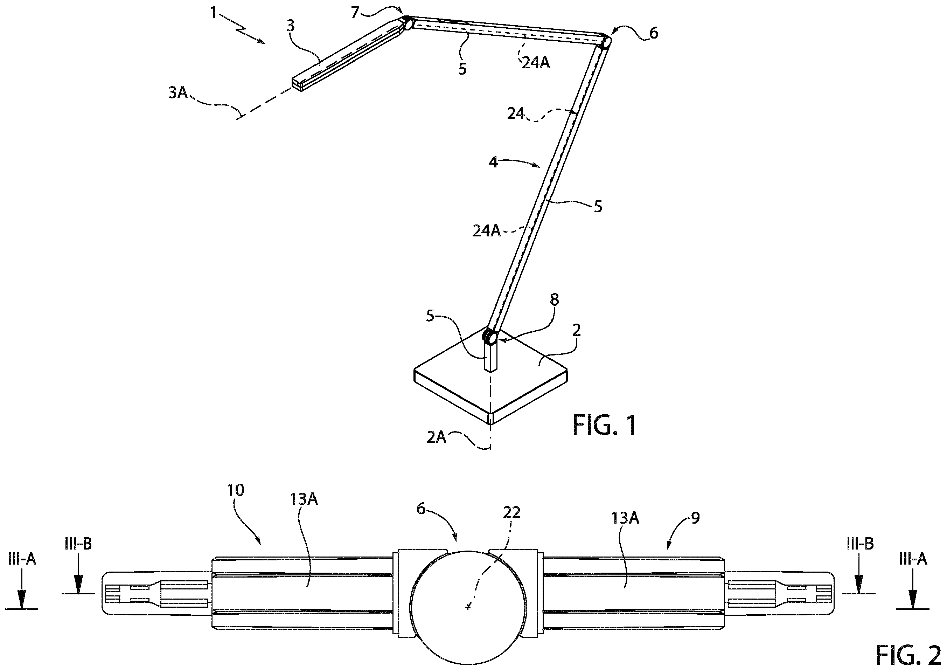

In Figure 1, reference numeral 1 indicates, as a whole, a table lamp comprising a support base 2, a light source 3 and an articulated arm 4 for supporting and adjusting the position of the light source 3.

The articulated arm 4 comprises a plurality of rigid shafts 5, in the specific case, tubular, an intermediate cylindrical joint 6 interposed between the two middle shafts 5 and two terminal cylindrical joints 7 and 8 associated, respectively, with the light source 3 and with the support base 2.

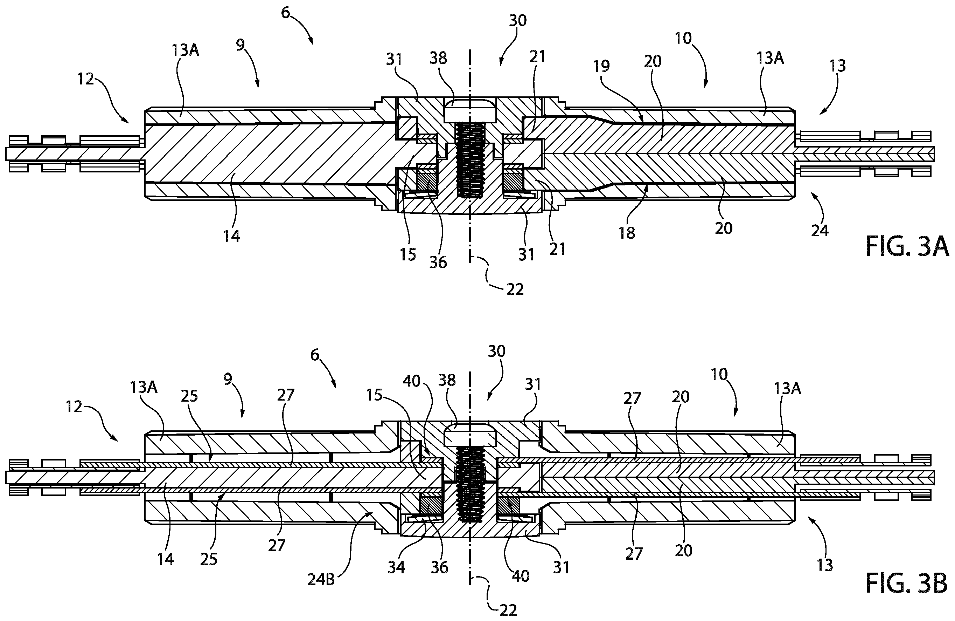

With reference to Figures 2, 3A and 3B, the intermediate cylindrical joint 6 comprises two attachment arms, indicated by 9 and 10, in turn comprising respective core elements indicated, respectively, by 12 and 13, and respective rectilinear outer shells 13A housing the relative core elements 12,13 and inserted and locked in the relative shafts 5. Conveniently, the shells 13A are made of an electrically insulating material.

The core element 12 is constituted by a monolithic body made of an electrically insulating material having a stem 14 locked in the relative shell 13A and a cylindrical annular body 15, while the core element 13 is constituted by two shaped portions indicated by 18 and 19, which are also monolithic and made of an electrically insulating material. The portions 18 and 19 comprise respective rectilinear shafts 20 arranged in contact with one another (Fig. 3) and locked within the relative shell 13 and respective cylindrical annular bodies 21. The annular bodies 21 are arranged on opposite sides of and in contact with the annular body 15 and have an outer diameter equal to that of the annular body 15. The annular bodies 15 and 21 extend coaxially to a common hinge axis 22 (Figures 2 and 3).

Again with reference to Figure 1, the lamp 1 comprises an electrical wiring 24 constituted by two insulated electric lines 25 (Figure 3B) to connect the light source 3 to an electric power source.

As evident in Figure 1, the electrical wiring 24 is completely housed in the arm 4 so that no part of the wiring 24 comprised between the base 2 and the light source 3 is visible from the outside.

The wiring 24 comprises section 24A that extends within the tubular bodies 5 and section 24B that extends through the joints 6,7 and 8.

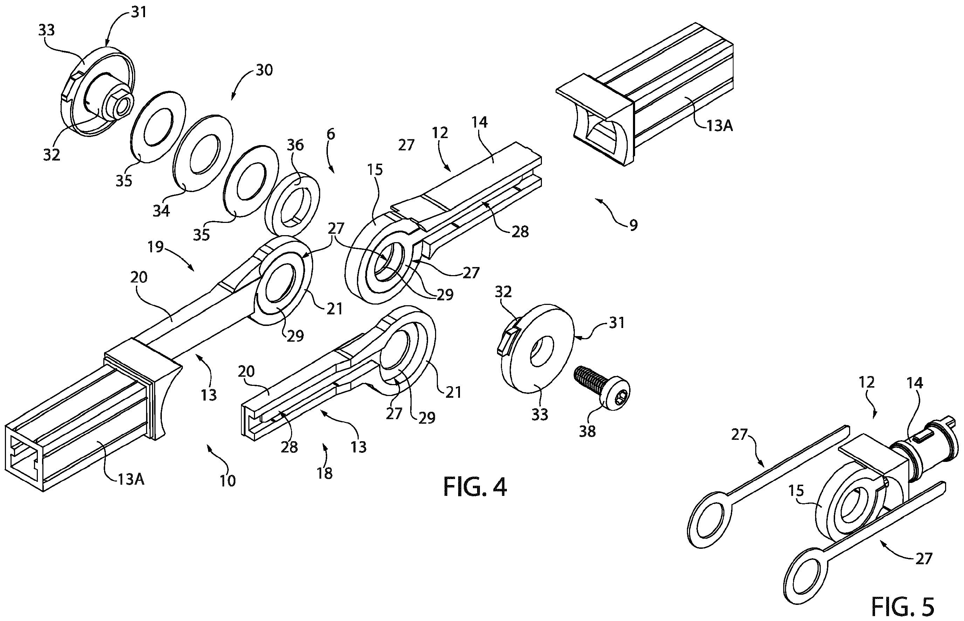

According to what illustrated in Figures 3B and 4, the section 24B which extends through the joint 6 comprises, for each arm 9, 10, two shaped conductor plates 27 arranged on opposite sides of the relative core element 12,13.

With reference to Figure 3B, each plate 27 comprises, in turn, a relative stem 28 connected to the remaining part of its electric line 25 (and an annular disk 29 arranged coaxially to the axis 22.

With reference to Figure 4, in the arm 9, the plates 27 are housed and snap-fitted in respective opposite recesses obtained in the core element 12, while in the arm 10, the plates 27 are housed and snap-fitted in respective opposite recesses obtained in the shaped portions 18 and 19 (Figure 4) .

With reference to Figure 3B, the position of the plates 27 is chosen so as to arrange the annular disks 28 of a same line 25 in positions facing one another and coaxial with the axis 22.

Again with reference to Figure 4 and to Figures 3A and 3B, the annular bodies 15 and 21 and the disks 29 are clamped together by an elastic device 30 for tensioning and adjusting the rigidity of the joint 6. Preferably, the elastic device 30 comprises, arranged along the axis 22, two clamping heads 31 arranged on the outside of the two shaped portions 18 and 19 and made of an insulating material. Each head 31 has a relative stem 32 inserted in a sliding manner inside the annular bodies 15 and 21 and disks 29 and respective flanges 33 arranged in abutment against the relative annular bodies 21 and at a fixed angle. The elastic device 30 comprises, additionally, a coned-disc spring 34 arranged coaxially to the axis 22 between two washers 35 and a spacer ring 36 arranged between one of the washers 35 and the respective annular disk 29. The device comprises, finally, a screw-nut assembly having a screw 38 adapted to tightly clamp to one another the heads 31, the annular bodies 15 and 21, the disks 29, the coned-disc spring 34, the spacer ring 36 and washers 35 (Figures 3A,3B). This way, the annular disks 29 facing each other are forced against one another and define a pair of sliding electric contacts 40 (Figures 3A,3B) which ensure the consistency of the electric power supply to the source 3 regardless of the configuration assumed by the arm 4.

The joints 7 and 8 are identical to the joint 6 with respect to their construction.

Alternatively, with reference to Figure 5, one or both of the joints 7 and 8 differ from the joint 6 in that the arm 9 is devoid of the casing 13. Conveniently, but not necessarily, the stem 14 of the core element 12 is cylindrical (Figure 5) and defines part of a cylindrical hinge adapted to allow, respectively, the rotation of the arm 4 with respect to the base 2 around a vertical axis 2A or the rotation of the light source 3 with respect to the arm 4 around an axis 3A orthogonal to the axis 22.

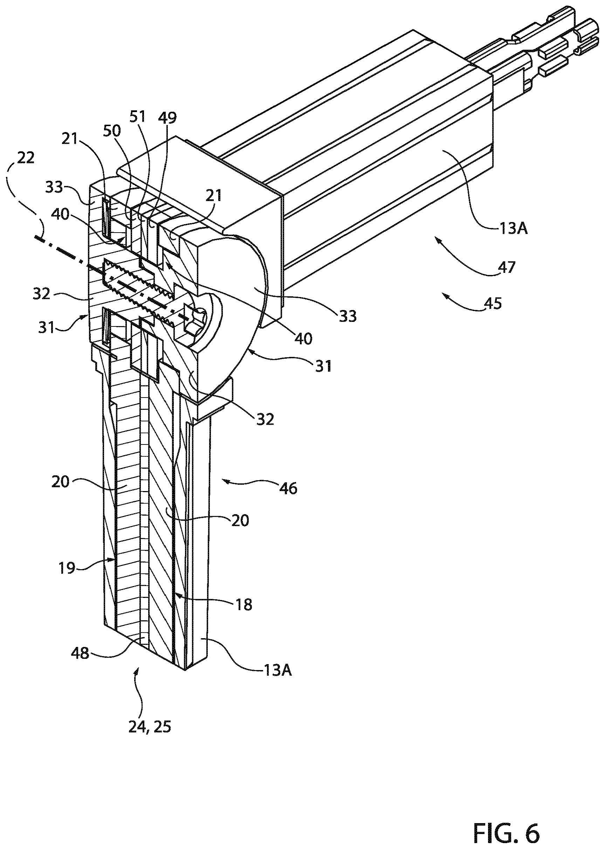

The variant illustrated in Figure 6 relates to a joint 45, which differs from the joint 6 as to several constructional details and whose constituent parts are indicated, where possible, by the same reference numerals of the corresponding parts of the joint 6.

The joint 45 comprises two arms 46 and 47 hinged to one another like the arms 9 and 10 to rotate around the axis 22 and differs from the joint 6 essentially in that it is devoid of the plates 27.

In particular, the arm 46 differs from the arm 10 in that the electric power supply section 24B is defined by the portions 18 and 19 of the core element 13, which are thus structural portions made of a metallic material or other metal conductor and are connected to the remaining part of the electric line 25 like the plates 27.

In the joint 45, the portions 18 and 19 are electrically insulated from one another by a portion 48 of insulating material.

The arm 47 differs, instead, from the arm 9 in that it is made in the same way of the arm 46 and thus comprises two shaped portions 49 and 50, which are also made of a metallic material and configured to be structural portions and are separate from one another by a block of insulating material 51. This way, the portions 21, 49 and 50 define, around the axis 22, the sliding contacts 40.

Finally, in the joint 45, the heads 31, made of a metallic material, are insulated from the portions 21 by means of the interposition of an insulating seal arranged along the axis 22.

The joint 45 is intended to be used in a lamp powered at a low voltage. When the lamp 3 is powered with a higher voltage, a system for electrically insulating the joint 45 from the outside known *per se* and not visible in the accompanying figures is provided.

Based on the foregoing, it is, first of all, evident that the joints 6,7,8 and 45 allow manufacturing adjustable lamps but with core elements and electrical wiring completely hidden in shells whatever the position assumed by the light source or by its support arm and thus having, compared with the known solutions, a high and unvarying aesthetic value.

The presence of the elastic device for tightly clamping the various parts along the hinge axis 22 allows, on the one hand, keeping the sliding contacts 40 constantly active and, on the other hand, arranging the arm 4 and the light source 3 in a plurality of functional positions, all absolutely stable. For these reasons, the described lamp 1 has an undoubted efficiency and functional reliability. Furthermore, the functional efficiency and reliability are ensured for light sources of greater weight than the traditional light sources and for arms with larger dimensions than the traditional arms having the constructional characteristics of the joint 45, in which the structural portions of the arms of the joint have the double function of load support and electric transmission. Based on the foregoing, it is evident that modifications and variants can be made to the described lamp 1 without thereby departing from the protective scope defined by claim 1.

In particular, the parts that define the electric connection and those that define the structural part of the joints or both can differ as to dimensions and/or geometry.

The sliding contacts can differ from those described, as well as the mode for clamping together the different portions of the arms of the joint along the hinge axis 22.

In particular, the lamp 1 could be devoid of the coned-disc spring 34. In such case, the coned-disc spring is replaced with a washer made of a plastic material or Nylon or of a deformable material or having high friction material or even with a material not very self-heating, for example brake lining, titanium, etc.

Based on the foregoing, it is finally evident that the described joints 6, 7 and 8 can find applications in various other illuminating devices such as, for example, wall-mounted devices, standing devices, devices for reading or adapted to be connected to shelves or supports in general by means of clamps or other equivalent attachment elements.

Finally, the lamp 1 could comprise a different number of joints and, for example, a single joint.

In any case, the described lamp is simple to produce from a construction point of view and, especially to assemble and, once assembled, has a high functional and shape stability whatever the position of the lamp and thus whatever the orientation between the arms.

## Claims

1. A cylindrical joint (6); (7); (8) for the orientation of a light source (3); the joint comprising a first arm (9) and a second arm (10) hinged to one another to rotate one with respect to the other around a hinge axis (22) and each being designed to be coupled to a relative attachment element (5); at least two insulated electric lines (25) for electrical connection of said light source (3) to an electric power source, each electric line comprising two conductor elements each constituting part of a relative said arm and a respective sliding electric contact surrounding said hinge axis (22) at least partially; the sliding electric contact of an electric line being electrically connected to the relative said conductor element and being electrically insulated from the sliding electric contact of the other electric line, **characterized in that** said first attachment arm (9) and said second attachment arm (10) comprise, respectively, a first core element (12) and a second core element (13); at least one (9) of said first and second arms comprising a relative rectilinear outer tubular shell (13A) housing the relative core element (12) and inserted and locked in the relative attachment element (5); and **in that** said first core element (12) comprises at least one monolithic body made of an electrically insulating material having a stem (14; 48) locked in the relative tubular shell (13A) and a cylindrical annular body (15; 51); said second core element (13) comprising two monolithic shaped portions (18)(19); (49) (51); said shaped portions (18) (19); (49) (51) comprising respective rectilinear shafts locked within the relative tubular shell (13A) and respective cylindrical annular portions coaxial with said hinge axis (22).

2. The joint according to claim 1, **characterized in that** said two shaped portions are made of an electrically insulating material.

3. The joint according to claim 2, **characterized in that** said two shaped portions (18)(19) are arranged in contact with one another.

4. The joint according to claim 1, **characterized in that** said two shaped portions are made of an electrically conductor material.

5. The joint according to claim 1, **characterized in that** each said sliding electric contact comprises two annular portions of conductor material coaxial with said hinge axis and in contact one with the other, and **in that** forcing means are provided to generate a forcing thrust of said cylindrical annular portions and said annular portions made of a conductor material against one another.

6. The joint according to claim 5, **characterized in that** said forcing means comprise at least one coned-disc spring (34) coaxial with said axis (22) and a screw-nut assembly having a tightening screw coaxial with said axis to tightly clamp said arms, said coned-disc spring and said two annular portions made of a conductor material together.

7. The joint according to claim 1, **characterized in that** each said conductor element and the relative sliding electric contact constitute part of a conductor body made in a single piece.

8. The joint according to claim 7, **characterized in that** each said body made in a single piece is defined by a shaped metal plate.

9. The joint according to claim 1, **characterized in that** at least one of said arms comprises at least one rigid body having a structural function made of electrically insulating material and comprising a bar and a ring extending from one end of said bar; each said rigid body made of electrically insulating material supporting one of said conductor elements.

10. The joint according to any one of the preceding claims, **characterized in that** at least one of said arms comprises a cylindrical portion defining part of a hinge having a further hinge axis orthogonal to said hinge axis and extending along a relative core element.

11. The joint according to claim 1, **characterized in that** each said conductor element and the relative sliding electric contact constitute parts of a rigid electric conductor having a structural function.
